# EUROPÄISCHE PATENTSCHRIFT

(11) **EP 1 128 981 B1**
(45) Veröffentlichungstag und Bekanntmachung des Hinweises auf die Patenterteilung: **19.01.2005**
(21) Anmeldenummer: 00951483.7
(22) Anmeldetag: 08.08.2000
(51) Int. Cl.: B60N 2/68

(54) **FAHRZEUGSITZ MIT SCHNELLMONTAGEVERBINDUNG**
VEHICLE SEAT WITH A JOINT FOR RAPID ASSEMBLY
SIEGE DE VEHICULE DOTE D'UNE LIAISON A MONTAGE RAPIDE

(30) Priorität: 09.09.1999 DE 19942976
(43) Veröffentlichungstag der Anmeldung: 05.09.2001
(73) Patentinhaber: KEIPER GmbH & Co. KG, 67657 Kaiserslautern (DE)
(72) Erfinder: FINNER, Holger, D-42499 Hückeswagen (DE); SCHÜLER, Rolf, D-42579 Heiligenhaus (DE)
(74) Vertreter: Held, Thomas, Dr.
(86) Internationale Anmeldenummer: PCT/EP2000/007661
(87) Internationale Veröffentlichungsnummer: WO 2001/017817

(56) Entgegenhaltungen:
- EP-A- 0 581 648
- US-A- 5 269 589
- US-A- 5 498 051
- US-A- 5 938 286

## Beschreibung

Die Erfindung betrifft einen Fahrzeugsitz, insbesondere einen Kraftfahrzeugsitz, mit den Merkmalen des Oberbegriffs des Anspruches 1.

Bei bekannten Fahrzeugsitzen werden bei der Herstellung zunächst die Metallstrukturen des Sitzunterbaus und der Rückenlehne zusammengeschraubt und dann die Polsterung aufgebracht. Aufgrund von Breitenschwankungen und Verschränkungen des Sitzunterbaus kann es zu Verspannungen im Lehneneinsteller und damit zu Komforteinbußen kommen. In der EP 0 581 648 A1 wird daher ein Fahrzeugsitz mit einer Schnellmontageverbindung vorgeschlagen, bei dem auf jeder Seite ein rohrartiger Fuß der Rückenlehne in eine entsprechende Aufnahme der Sitzunterbaus eingeführt und durch ein pilzartig geformtes Blech des Sitzunterbaus oder eine Federklammer, welche jeweils in eine Aussparung des Fußes greifen, gesichert wird. Aus der US 5,269,589 A ist ein Fahrzeugsitz der eingangs genannten Art bekannt, bei welchem auf jeder Seite ein Fuß des Sitzunterbaus in eine Aufnahme der Rückenlehne eingeführt sich und durch einen seitlich zur Einführrichtung angeordneten, schwenkbaren Sperrexzenter gesperrt. Zur Befestigung eines Fahrzeugsitzes am Fahrzeugboden ist in der US 5,938,286 A ein Drehfallenschloß beschrieben, bei welchem ein Bolzen des Fahrzeugbodens in eine gerade ausgebildete Gehäuseaufnahme gelangt und von einer hakenartigen Drehfalle formschlüssig gehalten wird, welche ihrerseits von einer Klinke gehalten wird.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Durch die Verwendung einer Schnellmontageverbindung können die Strukturen zunächst getrennt gepolstert und dann einfach zusammengebaut werden. Sofern erforderlich, können Sitzunterbau und Rückenlehne vor dem Zusammenbau zum Fahrzeughersteller transportiert werden und dort erst zusammengebaut werden. Dies hat den Vorteil eines geringeren Transportvolumens und einer optimalen Packungsdichte. Außerdem sind dadurch verschiedene Ausstattungsvarianten von Sitzunterbau und Rückenlehne leichter kombinierbar, und zwar sowohl beim Fahrzeugsitzhersteller als auch beim Fahrzeughersteller. Der in der Regel notwendige Toleranzausgleich kann in diese Schnittstelle zwischen Sitzunterbau und Rückenlehne verlagert werden. In einer bevorzugten Ausführungsform sind für die Schnellmontageverbindung am Sitzunterbau Aufnahmen vorgesehen, in die Füße der Rückenlehne einführbar sind. Aufnahmen und Füße können umgekehrt jeweils am anderen Teil vorgesehen sein. Über die Füße und die Aufnahmen werden die auf die Rückenlehne wirkenden Kräfte, insbesondere im Crashfall, in den Sitzunterbau weitergeleitet.

Durch die Bolzen und Labyrinthkulissen erfolgt eine erste Verriegelung der Schnellmontageverbindung, die einfach herzustellen und damit kostengünstig ist. Labyrinthkulissen haben für die Crashsicherheit den Vorteil, daß durch eine Bewegung in eine einzige Richtung die Bolzen nicht die Labyrinthkulissen verlassen können und daß in die jeweils anderen Richtungen ein Formschluß besteht, der - bei entsprechender Dimensionierung der Teile - sehr große Crashkräfte aufnimmt. Vorzugsweise sind auf jeder Seite des Fahrzeugsitzes je eine Aufnahme und ein Fuß mit je zwei Bolzen und Labyrinthkulissen vorgesehen. Es ist aber auch eine andere Anzahl dieser Verriegelungselemente möglich.

Für eine weitere Verriegelung ist der Sperrexzenter vorgesehen, der als Sperrelement in einem zusammengebauten Zustand des Fahrzeugsitzes wenigstens einen der vorhandenen Bolzen in der zugehörigen Labyrinthkulisse hält. Durch die exzentrische Form entsteht eine Spannwirkung, d.h. die kraftschlüssige Sicherung. Um den Sperrexzenter im zusammengebauten Zustand des Fahrzeugsitzes zu sichern, ist die federbelastete Sperrklinke vorgesehen, die eine ungewollte Öffnungsbewegung des Sperrexzenters verhindert.

Vorzugsweise schließt sich die Schnellmontageverbindung werkzeuglos, so daß der Zusammenbau einfach zu bewerkstelligen ist. Schraubverbindungen, die im Stand der Technik bei Toleranzschwankungen zu Verspannungen führen, werden durch die erfindungsgemäße, schraubenlose und nietenlose Schnellmontageverbindung vermieden. Der Zusammenbau erfolgt in der Regel ein einiges Mal während der Produktion des Fahrzeugsitzes. Die Schnellmontageverbindung kann aber gegebenenfalls auch vom Sitzbenutzer kontrolliert gelöst und wieder geschlossen werden, wenn der Sitzbenutzer beispielsweise weiteren Stauraum in seinem Fahrzeug schaffen will.

Um den Sperrexzenter in einem zerlegten Zustand des Fahrzeugsitzes entriegelt zu halten, ist vorzugsweise eine Auslösesperre vorgesehen. Damit diese Auslösesperre leicht gelöst werden kann, ist sie in einem zerlegten Zustand des Fahrzeugsitzes so angeordnet, daß sie vorzugsweise eine der Labyrinthkulissen kreuzt, d.h. in dem vom Bolzen zurückzulegenden Weg liegt.

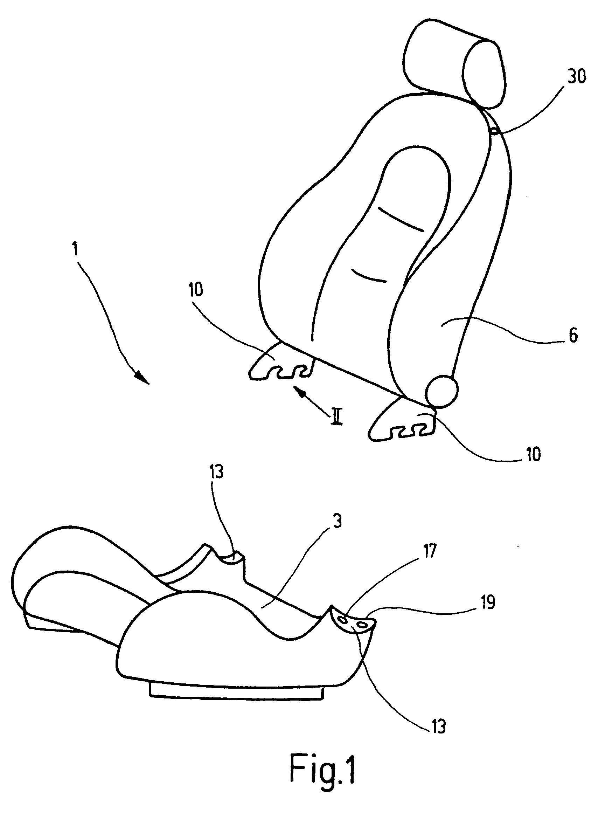

Im folgenden ist die Erfindung anhand eines in der Zeichnung dargestellten Ausführungsbeispiels näher erläutert. Es zeigen
- Fig. 1: eine perspektivische, schematisch dargestellte Ansicht des Ausführungsbeispiels im zerlegten Zustand,

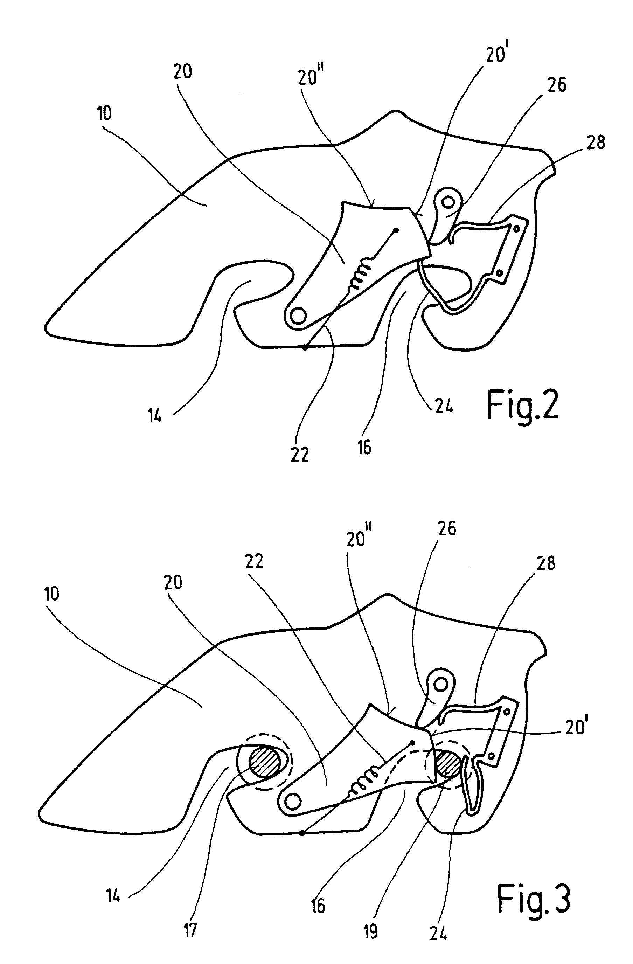

- Fig. 2: eine Teilansicht des Ausführungsbeispiels im zerlegten Zustand in Richtung des Pfeiles II in Fig. 1, und
- Fig. 3: eine Teilansicht des Ausführungsbeispiels entsprechend Fig. 2 im zusammengebauten Zustand.

Ein als Vordersitz eines Kraftfahrzeuges ausgebildeter Fahrzeugsitz 1 weist einen Sitzunterbau 3 zur Aufnahme eines Sitzkissens und eine Rückenlehne 6 auf. Die nachfolgenden Richtungsangaben beziehen sich auf die Orientierung des Fahrzeugsitzes I beim Einbau in das Kraftfahrzeug und der gewöhnlichen Fahrtrichtung des letzteren. Als Lehneneinsteller sind am unteren Rand der Rückenlehne 6 seitlich zwei Gelenkbeschläge vorgesehen, an deren Beschlagunterteile jeweils ein Fuß 10 angeschraubt ist. Der Sitzunterbau 3 weist an seinem hinteren Ende auf beiden Seiten je eine nach oben offene Aufnahme 13 auf, in die jeweils einer der Füße 10 einführbar ist. Die beiden Füße 10 und die beiden Aufnahmen 13 sind spiegelbildlich zueinander ausgebildet, so daß im folgenden nur die auf der linken Seite des Fahrzeugsitzes 1 vorhanden Teile für diese Schnellmontageverbindung beschrieben sind.

Der Fuß 10 hat die Grundform einer in Längsrichtung des Fahrzeugsitzes 1 hochkant stehenden dreieckigen Platte. Auf seiner Unterseite weist der Fuß 10 eine vordere Labyrinthkulisse 14 und eine hintere Labyrinthkulisse 16 auf. Die beiden in Fahrrichtung hintereinander angeordneten Labyrinthkulissen 14 und 16 verlaufen von der Unterseite des Fußes 10 aus zunächst nach oben und biegen dann nach hinten ab. Die beiden Labyrinthkulissen 14 und 16 wirken mit einem vorderen bzw. hinteren Bolzen 17 bzw. 19 zusammen. Die beiden Bolzen 17 und 19 sind innerhalb der Aufnahme 13 an deren weiter innen angeordneten Wand seitlich befestigt und stehen von dieser Wand in Richtung zur Außenseite des Fahrzeugsitzes 1 ab. An ihren freien Enden sind die beiden Bolzen 17 und 19 mit tellerförmig verdickten Köpfen versehen.

Im folgenden ist der zerlegte Zustand, also der Zustand vor dem Zusammenbau von Sitzunterbau 3 und Rückenlehne 6, beschrieben. Auf der nach innen gewandten Seite des Fußes 10 ist zwischen den beiden Labyrinthkulissen 14 und 16 ein Sperrexzenter 20 gelagert, der um eine horizontale Drehachse schwenkbar ist. Das von der Drehachse abgewandte Ende des Sperrexzenters 20 ist im Bereich der hinteren Labyrinthkulisse 16 angeordnet und wird durch eine starke Zugfeder 22, die im Fuß 10 eingehängt ist. nach unten gezogen. Eine aus Federstahl gebogene Auslösesperre 24 ist am Fuß 10 hinter der hinteren Labyrinthkulisse 16 angebracht und von ihrer Befestigungsstelle aus zunächst nach schräg vorne und dann nach oben geführt. so daß sie - in Blickrichtung auf den Fuß 10 - die Labyrinthkulisse 16 kreuzt. Das Ende der Auslösesperre 24 liegt formschlüssig am Sperrexzenter 20 an und wirkt so der Zugfeder 22 entgegen. Eine am Fuß 10 oberhalb der hinteren Labyrinthkulisse 16 gelagerte Sperrklinke 26 weist zunächst nach unten. Eine Blattfeder 28, die im Ausführungsbeispiel einstückig mit der Auslösesperre 24 ausgebildet ist, drückt die Sperrklinke 26 nach vorne in Anlage an eine Exzenterfläche 20' des Sperrexzenters 20, die bezüglich der Drehachse des Sperrexzenters 20 exzentrisch verläuft.

Beim Zusammenbau von Sitzunterbau 3 und Rückenlehne 6 wird jeder Fuß 10 in je eine Aufnahme 13 eingeführt. Die Labyrinthkulissen 14 und 16 sind auf die Bolzen 17 bzw. 19 ausgerichtet. Beim Absenken gelangen die Bolzen 17 und 19 in die Labyrinthkulissen 14 bzw. 16, und zwar zunächst in den nach oben verlaufenden Teil. Der Fuß 10 muß nun nach vorne geschoben werden, so daß die Bolzen 17 und 19 in den nach hinten verlaufenden Teil der Labyrinthkulissen 14 bzw. 16 gelangen. Der hintere Bolzen 19 drückt dabei die Auslösesperre 24 nach hinten, so daß diese den Sperrexzenter 20 freigibt. Die Zugfeder 22 zieht den Sperrexzenter 20 nach unten, bis dessen Exzenterfläche 20' am hinteren Bolzen 19 auf dessen Vorderseite anliegt. Nachdem der Sperrexzenter 20 mit seiner Exzenterfläche 20' nach unten gezogen worden ist, kann die Sperrklinke 26 mit Unterstützung der Blattfeder 28 nach vorne schwenken, bis sie in Anlage an eine Sperrfläche 20" des Sperrexzenters 20 gelangt und dort gehalten wird. Der Sperrexzenter 20 ist dadurch fest verspannt. Als direkte Folge davon kann sich der hintere Bolzen 19 nicht mehr aus der hinteren Labyrinthkulissen 16 heraus bewegen. wodurch der Fuß 10 in der Aufnahme 13 festgelegt ist. Die Schnellmontageverbindung schließt sich somit werkzeuglos.

Als Anzeige für einen korrekten Zusammenbau ist an der Rückenlehne 6 vorzugsweise ein Signalknopf 30 vorgesehen, der beispielsweise ausgelöst wird. wenn Sperrexzenter 20 und Sperrklinke 26 sich in den vorgesehenen Positionen befinden.

Um Sitzunterbau 3 und Rückenlehne 6 wieder zu trennen. kann ein Hebel vorgesehen sein, der die Sperrklinke 26 entgegen der Kraft der Blattfeder 28 zurückzieht. Der Sperrexzenter 20 wird dann beispielsweise mittels einer Nase an der Sperrklinke 26 oder durch einen weiteren Hebel entgegen der Kraft der Zugfeder 22 vom hinteren Bolzen 19 weg nach oben gedrückt. bis die Auslösesperre 24 den Sperrexzenter 20 wieder abstützen kann. Um die seitliche Anlage von Fuß 10 und Aufnahme 13 zu verbessern. kann der Fuß 10 im Bereich der vorderen Labyrinthkulisse 14 mit einer Verdickung von der Stärke des Sperrexzenters 20 und der Sperrklinke 26 versehen sein.

Für einen Toleranzausgleich ist der vordere Bolzen 17 vorzugsweise mit einem deformierbaren, eventuell elastischen Mantel überzogen. Dieser Mantel verformt sich aber im Crashfall vollständig, so daß der vordere Bolzen 17 dann direkt in Anlage an den Fuß 10 kommt.

## Patentansprüche

1. Fahrzeugsitz, insbesondere Kraftfahrzeugsitz, mit einem Sitzunterbau (3) und einer am Sitzunterbau (3) zu befestigenden Rückenlehne (6), welche mittels einer Schnellmontageverbindung (10, 13) am Sitzunterbau (3) befestigbar ist, wobei für die Schnellmontageverbindung (10, 13) am Sitzunterbau (3) und/oder an der Rückenlehne (6) Aufnahmen (13) vorgesehen sind, in die Füße (10) des jeweils anderen Teiles (6 bzw. 3) einführbar sind, und ein federbelasteter Sperrexzenter (20) vorgesehen ist, **dadurch gekennzeichnet, daß** die Aufnahmen (13) und/oder die Füße (10) wenigstens ein Bolzen (17, 19) aufweisen, die in eine Labyrinthkulisse (14, 16) des jeweils anderen Teiles (10 bzw. 13) einführbar ist, und daß der Sperrexzenter (20) in einem zusammengebauten Zustand des Fahrzeugsitzes (1) wenigstens einen der vorhandenen Bolzen (19) kraftschlüssig in einer der vorhandenen Labyrinthkulissen (16) hält, wobei eine federbelastete Sperrklinke (26) zur Sicherung des Sperrexzenters (20) im zusammengebauten Zustand des Fahrzeugsitzes (1) vorgesehen ist.

2. Fahrzeugsitz nach Anspruch 1, **dadurch gekennzeichnet, daß** die Schnellmontageverbindung (10, 13) sich werkzeuglos schließt.

3. Fahrzeugsitz nach Anspruch 1 oder 2, **dadurch gekennzeichnet, daß** eine Auslösesperre (24) vorgesehen ist, die in einem zerlegten Zustand des Fahrzeugsitzes (1) den Sperrexzenter (20) hält.

4. Fahrzeugsitz nach Anspruch 3, **dadurch gekennzeichnet, daß** die Auslösesperre (24) in einem zerlegten Zustand des Fahrzeugsitzes (1) eine der Labyrinthkulissen (16) kreuzt.

5. Fahrzeugsitz nach einem der Ansprüche 1 bis 4, **dadurch gekennzeichnet, daß** wenigstens einer der Bolzen (17) Mittel zum Toleranzausgleich aufweist.

6. Fahrzeugsitz nach Anspruch 5, **dadurch gekennzeichnet, daß** der Bolzen (17) mit einem im Crashfall deformierbaren Mantel überzogen ist.

7. Fahrzeugsitz nach einem der Ansprüche 1 bis 6, **dadurch gekennzeichnet, daß** eine Anzeige (30) vorgesehen ist, um den zusammengebauten Zustand des Fahrzeugsitzes (1) anzuzeigen.

## Claims

1. Vehicle seat, in particular a motor vehicle seat, having a seat substructure (3) and a backrest (6) which is to be fixed to the seat substructure (3) and which can be fixed to the seat substructure (3) by means of a quick-fitting connection (10, 13), receiving members (13) being provided on the seat substructure (3) and/or on the backrest (6) for the quick-fitting connection (10, 13), in which receiving members (13) feet (10) of the respective other part (6 or 3) can be introduced, and a resiliently loaded locking cam (20) being provided, **characterised in that** the receiving members (13) and/or the feet (10) have at least one pin (17, 19) which can be introduced into a labyrinth-like slotted member (14, 16) of the respective other part (10 or 13), and **in that**, when the vehicle seat (1) is in an assembled state, the locking cam (20) retains at least one of the pins (19) provided in a non-positive-locking manner in one of the labyrinth-like slotted members (16) provided, a resiliently loaded locking detent (26) being provided for securing the locking cam (20) when the vehicle seat (1) is in the assembled state.

2. Vehicle seat according to claim 1, **characterised in that** the quick-fitting connection (10, 13) is closed without any tools.

3. Vehicle seat according to claim 1 or 2, **characterised in that** a release catch (24) is provided and retains the locking cam (20) when the vehicle seat (1) is in a disassembled state.

4. Vehicle seat according to claim 3, **characterised in that** the release catch (24) crosses one of the labyrinth-like slotted members (16) when the vehicle seat (1) is in a disassembled state.

5. Vehicle seat according to any one of claims 1 to 4, **characterised in that** at least one of the pins (17) has means for compensating for tolerances.

6. Vehicle seat according to claim 5, **characterised in that** the pin (17) is covered by a casing which can be deformed in the event of a crash.

7. Vehicle seat according to any one of claims 1 to 6, **characterised in that** an indicating means (30) is provided in order to indicate the assembled state of the vehicle seat (1).

## Revendications

1. Siège de véhicule, en particulier siège de véhicule automobile, avec une base de siège (3) et un dossier (6) à fixer sur la base de siège (3), qui peut être fixé sur la base de siège (3) au moyen d'un assemblage de montage rapide (10, 13), des logements (13) étant prévus pour l'assemblage de montage rapide (10, 13) sur la base du siège (3) et/ou sur le dossier (6), dans lesquels des pieds (10) de l'autre partie (6 respectivement 3) peuvent être insérés et un excentrique de blocage commandé par ressort (20) étant prévu, **caractérisé par le fait que** les logements (13) et/ou les pieds (10) présentent au moins un goujon (17, 19) qui peut être introduit dans une coulisse à labyrinthe (14, 16) de l'autre partie (10 respectivement 13) et **par le fait que** l'excentrique de blocage (20) maintient, lorsque le siège de véhicule (1) est monté, au moins l'un des goujons existants (19) dans l'une des coulisses à labyrinthe existantes (16) de manière solidaire par une liaison dynamique, un cliquet de blocage commandé par ressort (26) étant prévu pour bloquer l'excentrique de blocage (20) lorsque le siège de véhicule (1) est monté.

2. Siège de véhicule selon la revendication 1, **caractérisé par le fait que** l'assemblage de montage rapide (10, 13) se ferme sans outil.

3. Siège de véhicule selon l'une des revendications 1 ou 2, **caractérisé par le fait qu'**il est prévu un blocage de déclenchement (24) qui maintient l'excentrique de blocage (20) lorsque le siège de véhicule (1) est démonté.

4. Siège de véhicule selon la revendication 3, **caractérisé par le fait que** le blocage de déclenchement (24) croise une des coulisses à labyrinthe (16) lorsque le siège de véhicule (1) est démonté.

5. Siège de véhicule selon l'une des revendications 1 à 4, **caractérisé par le fait que** l'un des goujons (17) au moins présente des moyens pour la compensation des tolérances.

6. Siège de véhicule selon la revendication 5, **caractérisé par le fait que** le goujon (17) est recouvert par une enveloppe déformable en cas de choc.

7. Siège de véhicule selon l'une des revendications 1 à 6, **caractérisé par le fait qu'**il est prévu un dispositif de signalisation (30) pour indiquer que le siège de véhicule (1) est monté.
